# EUROPÄISCHE PATENTANMELDUNG

(11) **EP 1 108 832 A2**
(43) Veröffentlichungstag der Anmeldung: **20.06.2001**
(21) Anmeldenummer: 00890343.7
(22) Anmeldetag: 16.11.2000
(51) Int. Cl.: E04H 1/04

(54) **Gebäude**

(30) Priorität: 17.12.1999 AT 213799
(71) Anmelder: Adolf Jandl Patentholding KEG, 9421 Eitweg (AT)
(72) Erfinder: Jandl, Adolf, 9421 Eitweg (AT)
(74) Vertreter: Beer, Manfred, Dipl.-Ing.

(57) **Zusammenfassung**

Unter einem Gebäude (1) mit einem Wohn- und/oder Nutzbereich (2) ist, wenigstens teilweise im Erdreich (9) versenkt eine Kammer (4) vorgesehen, die zum Wohn- und/oder Nutzbereich (2) hin ständig offen ist. Der Innenraum der Kammer (4), die als Keller (3) ausgebildet sein kann, steht wirkmäßig mit einem im Erdreich (9) angeordneten Wärmetauscher in Verbindung. Durch eine Wärmepumpe kann dem Erdreich (9) Wärme entzogen oder Wärme an das Erdreich (9) abgegeben werden, um das Gebäude (1) zu heizen oder zu kühlen.

## Beschreibung

Die Erfindung betrifft ein Gebäude, insbesondere einen Wohnbau mit Wohn- und/oder Nutzräumen, und mit einem wenigstens teilweise unterhalb der Bodenoberfläche angeordneten Raum.

Der Erfindung liegt die Aufgabe zugrunde, ein Gebäude der eingangs genannten Gattung anzugeben, bei dem der Energieaufwand zum Klimatisieren des Gebäudes, nämlich Kühlen bei hohen Außentemperaturen und Heizen bei niedrigen Außentemperaturen mit geringem Energiebedarf möglich ist.

Gelöst wird diese Aufgabe mit einem Gebäude, welches die Merkmale des Anspruches 1 aufweist.

Bevorzugte und vorteilhafte Ausgestaltungen des erfindungsgemäßen Gebäudes sind Gegenstand der Unteransprüche.

Wesentlich ist für das Gebäude der Erfindung, daß beispielsweise unterhalb des für Arbeit und/oder Wohnen benützten Teils des Gebäudes ein beispielsweise als (Teil-)Keller ausgebildeter Raum ("Kammer") vorgesehen ist, und daß an diese Kammer funktionell ein im Erdreich verlegter Wärmetauscher angeschlossen ist. So kann über die Kammer eine thermische Verbindung zwischen Erde und der in der Kammer des Gebäudes enthaltenen Luft hergestellt werden, und Umweltenergie kann in Form von Erdwärme der Kammer zugeführt werden. Diese der Kammer zugeführte Wärme kann aus der Kammer dem benützten Teil des Gebäudes, zu dem hin die Kammer offen ist, zugeführt werden, um den benützten Teil des Gebäudes zu erwärmen. Wenn bei hohen Außentemperaturen die Temperatur im Gebäude und somit auch in der Kammer über der Erdtemperatur liegt, kann über den im Erdreich verlegten Wärmetauscher der Kammer Wärme entzogen und so das Gebäude gekühlt werden.

Der Wärmetausch, also entweder das Entziehen von Wärme aus der Erde oder Zuführen von Wärme in die Erde über den an die Kammer angeschlossenen, also mit der Kammer wirkmäßig verbundenen Wärmetauscher kann durch wenigstens eine Wärmepumpe und/oder wenigstens einen Kompressor unterstützt werden.

Mit Vorteil kann die Kammer vorgefertigt, beispielsweise aus Fertigteilen hergestellt sein. Die Kammer kann als Halbkeller ausgebildet sein, der nur unter einem Teil der Nutzfläche des Gebäudes angeordnet ist.

Vorteilhaft kann es weiters sein, wenn die Wände, die Decke und der Boden des Gebäudes zwar hoch wärmedämmend, aber mit geringem Wärmespeichervermögen ausgebildet sind. Beispielsweise kann das erfindungsgemäße Gebäude in dem Teil, der zur Benützung durch Menschen bestimmt ist, aus Faltwerkdecken- oder -wandelementen gemäß der WO 97/14857 hergestellt sein.

Die Wände und der Boden der Kammer, an die der im Erdbereich verlegte Wärmetauscher angeschlossen ist, können feuchtigkeitsdurchlässig ausgebildet sein. So wird je nach der Temperatur in der Kammer durch Verdunsten eindringender Feuchtigkeit eine zusätzliche Kühlung erreicht, oder durch Kondensieren von im Gebäude befindlicher Feuchtigkeit wird Wärme gewonnen. Diese Ausführungsform der Erfindung hat weiters den Vorteil, daß die bekannten, nachteiligen Wirkungen von Feuchtigkeit nicht auftreten.

Um den Primärenergiebedarf für das Klimatisieren/Temperieren des erfindungsgemäßen Gebäudes (z.B. den Energiebedarf für den Betrieb von Wärmepumpen) klein zu halten, kann insbesondere an der Südseite des Gebäudes eine in Abhängigkeit von der Sonneneinstrahlung geregelte Beschattungsanlage vorgesehen sein. Diese Beschattungsanlage kann nicht nur die Funktionen Sonnenschutz und/oder Lichtschutz, sondern auch die Funktion Energiegewinnung übernehmen, wenn die Beschattungsanlage mit Sonnenzellen ausgebildet ist. Diese Sonnenzellen erzeugen Strom, der für den Betrieb, das Benützen, das Klimatisieren, sowie das Temperieren des Gebäudes herangezogen werden kann. Überschüssiger Strom kann in Batterien oder Akkumulatoren gespeichert werden. Bei hinreichender Dimensionierung der Sonnenzellen kann der so gewonnene, gegebenenfalls gespeicherte Strom auch für den Betrieb von Haushaltsgeräten herangezogen werden.

In einer Ausführungsform des erfindungsgemäßen Gehäuses kann vorgesehen sein, daß der über der Kammer, die an den Wärmetauscher, der im Erdreich verlegt ist, angeschlossen ist, angeordnete Teil des Nutz- oder Wohnbereiches mit einem Boden mit geringer Wärmedämmung ausgeführt ist. So kann dieser Teil des Gebäudes über die Temperatur in der Kammer klimatisiert (erwärmt oder gekühlt) werden.

Was die Fenster des erfindungsgemäßen Gebäudes anlangt, so besteht die Möglichkeit, diese ähnlich wie Autofenster, als verschiebbare Einfach- oder Doppelscheiben oder als Isolierglasscheiben auszubilden, wobei bevorzugt ist, den Fenstern integrierte Abschattungseinrichtungen zuzuordnen. Auf diese Weise kann über die Fenster bei Bedarf, gegebenenfalls auch automatisch, ein Belüften und/oder der Licht- und/oder Wärmeschutz vorgenommen werden.

Die vornehmlich an südseitigen Fenstern des Gebäudes vorgesehenen Abschattungseinrichtungen können übliche Jalousien oder sonstige Sonnenschutzvorrichtungen sein. Bevorzugt ist es aber, wenn die Abschattungseinrichtungen in die Glasteile der Fenster integriert sind. Dies ist beispielsweise über mit Flüssigkristall beschichtetes Glas der Fenster möglich, da solche Flüssigkristalle dazu verwendet werden können, das Glas der Fenster hinsichtlich seiner Durchlässigkeit für Licht bei Bedarf zu verändern.

Im Rahmen der Erfindung ist es auch möglich, das erfindungsgemäße Gebäude hinsichtlich des Wasserbedarfes weitgehend oder vollständig autark zu gestalten. So kann vorgesehen sein, daß Wasser aus im Gebäude befindlicher Luft durch Kondensieren gewonnen wird. Brauchwasser kann durch Sammeln von Niederschlägen gewonnen werden. Eine weitere Möglichkeit Wasser zu gewinnen, besteht im Rahmen des erfindungsgemäßen Gebäudes darin, Abwässer zu verdunsten und nach Kondensation wieder als Nutzwasser zu verwenden. Die getrockneten Rückstände, die beim Verdunsten des Abwassers anfallen, werden von Zeit zu Zeit entsorgt.

Von erheblichem Vorteil bei dem erfindungsgemäßen Gebäude ist es, daß Heizung und Kühlung (abhängig von den klimatischen Bedingungen, beispielsweise der geographischen Breite, wo das Haus steht) über die temperaturausgleichende Kammer, die (beispielsweise als Keller oder Teilkeller ausgebildet ist) in Verbindung mit einer (klein dimensionierten)Erdwärmepumpe und/oder mit vollständiger Luft-Wärmerückgewinnung zu regeln. Auch für die Kühlung kann eine Wärmepumpe, beispielsweise ein Kühlkompressor,verwendet werden.

Weitere Einzelheiten, Vorteile und Merkmale der Erfindung ergeben sich aus der nachstehenden Beschreibung eines bevorzugten Beispiels für ein Gebäude gemäß der Erfindung.

Es zeigt:
Fig. 1 ein Gebäude in Schrägansicht;
Fig. 2 einen Vertikalschnitt durch das Gebäude; und
Fig. 3 den Grundriß des Gehäuses aus Fig. 1 und 2.

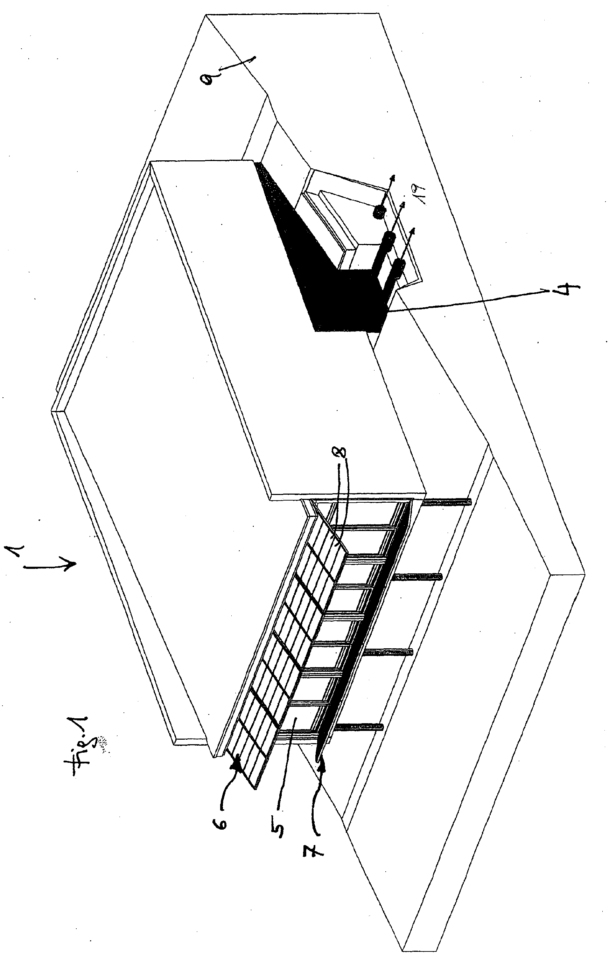

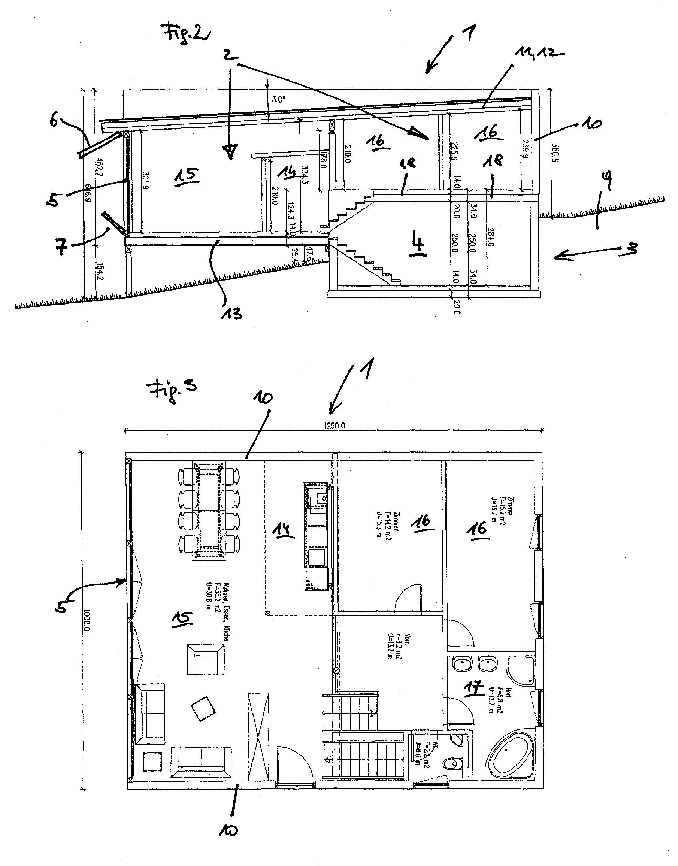

In dem gezeigten Ausführungsbeispiel ist das erfindungsgemäße Gebäude 1 als Wohnbau in Hanglage (Fig. 1, 2) ausgeführt. Es besitzt einen Wohn- und Nutzbereich 2, der teilweise unterkellert ist, wobei im Keller 3 eine die Temperatur ausgleichende Kammer 4 vorgesehen ist. Hiezu ist die in dem im gezeigten Ausführungsbeispiel als Teilkeller ausgebildeten Keller 3 vorgesehene Kammer 4 über von ihr ausgehende Rohre 19 mit einem (nicht gezeigten) im Erdreich 9 verlegten Wärmetauscher verbunden.

Die Kammer 4 ist zum Wohn- und Nutzbereich 2 des Gebäudes 1 hin offen, so daß zwischen der Kammer 4 und dem Wohn- und Nutzbereich 2 des Gebäudes 1 ein ständiger Austausch von Luft und Wärme stattfindet.

Im gezeigten Ausführungsbeispiel ist eine über die gesamte Breite des Gebäudes 1 durchgehende Fensterfront 5 nach Süden ausgerichtet und dort mit einer automatisch geregelten Beschattungseinrichtung 6, 7 ausgestattet. Die Beschattungseinrichtung 6, 7 übernimmt die Funktionen Sonnenschutz und Lichtschutz, sowie aufgrund von an der Oberseite der Beschattungseinrichtung 6 angeordneten Sonnenzellen 8 die Energiegewinnung durch Erzeugung von Strom. Überschüssiger, nicht unmittelbar verbrauchter Strom kann beispielsweise in Batterien oder Akkumulatoren gespeichert werden. Zusätzlich oder alternativ können an der Beschattungseinrichtung 6, 7 auch Sonnenkollektoren (nicht gezeigt) zur Gewinnung von Warmwasser angeordnet sein.

Wände 10, Decke 11 und Dach 12 des Erd- oder Obergeschoßes des Gebäudes 1 bestehen aus Wandelementen, die eine hohe Wärmedämmung aufweisen und gleichzeitig praktisch wärmespeicherlos sind, so daß die Temperatur im Gebäude 1 in kurzer Zeit und ohne hohen Energieaufwand geändert werden kann.

Die Fenster des Gebäudes 1 sind bevorzugt als Schiebefenster, ähnlich Autofenstern, ausgeführt, die für eine geregelte Belüftung des Gebäudes 1 mit einer automatischen Regelung für das Öffnen und Schließen verbunden sind. Zusätzlich können die Fenster mit einer integrierten Abschattungseinrichtung ausgebildet sein. Bevorzugt sind Abschattungseinrichtungen, welche die Licht- und damit auch die Wärmedurchlässigkeit der Glasscheiben der Fenster verändern, um sie an die jeweiligen Erfordernisse anzupassen.

Die Böden 13 sind in dem als Küche 14 und Wohnraum 15 dienenden Teil des Gebäudes 1 in üblicher Weise, bevorzugt gut isolierend, ausgeführt. Im Bereich der. niedrigeren, im Ausführungsbeispiel über der Kammer 4, die im Erdreich 9 versenkt ist, angeordneten Schlafräume 16, sowie Nebenräume 17, wie Bad, WC u.dgl. sollen die Böden 18 möglichst wenig isolierend sein, damit die dort vorgesehenen Böden 18 als Klimatisierungsmittel (sie sind ja über der Kammer 4 angeordnet) dienen können. So können die Räume 16, 17 zusätzlich zu der Klimatisierung/Temperierung über die aus der Kammer 4 stammende Luft auch über den Boden 18 klimatisiert und temperiert werden.

Das Heizen und Kühlen des Gebäudes 1 erfolgt über die Kammer 4, die zum Nutzbereich 2 des Gebäudes 1 hin offen ausgebildet ist. Es sind also zwischen der Kammer 4 und dem Nutzbereich 2 des Gebäudes 1 keine Trennwände oder Türen vorgesehen. Im gezeigten Ausführungsbeispiel steht die Kammer 4 mit dem Wohn- und Nutzbereich 2 des Gebäudes 1 über eine offene Stiege in Verbindung. Zum Heizen des Gebäudes 1 wird dem Erdreich 9 gegebenenfalls in Verbindung mit einer Erdwärmepumpe über den im Erdreich 9 verlegten Wärmetauscher Wärme entzogen. Zum Kühlen wird mit einer, beispielsweise als Kompressor ausgebildeten, Wärmepumpe der Luft im Gebäude 1 Wärme entzogen und über den Wärmetauscher in das Erdreich 9 abgegeben.

Bevorzugt ist es, wenn die Kammer 4, von der der Wärmetauscher ausgeht, als Fertigteilkeller ausgebildet ist. Dabei können die Umgrenzungswände der Kammer so (feuchtigkeits)durchlässig sein, daß das Prinzip der Verdunstungskälte bzw. Verdunstungswärme wirken kann. Ferner kann der Rahmen der Kammer 4 z.B. deren Umgrenzungswände durch in ihn eingebaute Rohre ebenfalls für den Wärmetausch herangezogen werden, indem Erdwärme genützt, oder Wärme an die Erde 9 über die in Wände der Kammer 4 eingebauten Rohre abgegeben wird. So kann die Wirksamkeit des Wärmetauschers erhöht werden.

Die Fenster 5 an der Südseite des Gehäuses 1 können als faltbare Fenster oder Schiebefenster ausgeführt sein, so daß die Möglichkeit besteht, das Gebäude 1 bei völlig oder teilweise geöffneter Südfassade wie eine Veranda zu benützen.

Zusammenfassend kann ein bevorzugtes Ausführungsbeispiel des erfindungsgemäßen Gebäudes wie folgt beschrieben werden:
Unter einem Gebäude 1 mit einem Wohn- und/oder Nutzbereich 2 ist, wenigstens teilweise im Erdreich 9 versenkt eine Kammer 4 vorgesehen, die zum Wohn- und/oder Nutzbereich 2 hin ständig offen ist. Der Innenraum der Kammer 4, die als Keller 3 ausgebildet sein kann, steht wirkmäßig mit einem im Erdreich 9 angeordneten Wärmetauscher in Verbindung. Durch eine Wärmepumpe kann dem Erdreich 9 Wärme entzogen oder Wärme an das Erdreich 9 abgegeben werden, um das Gebäude 1 zu heizen oder zu kühlen.

## Patentansprüche

1. Gebäude (1), insbesondere Wohnbau, mit einem unterhalb des Gebäudes (1) angeordneten, wenigstens teilweise im Erdreich (9) versenkten Teil (4), dadurch gekennzeichnet, daß der im Erdreich (9) versenkte Teil als Kammer (4) ausgebildet ist, daß das Innere der Kammer (4) mit wenigstens einem im Erdreich (9) verlegten Wärmetauscher wirkmäßig verbunden ist und daß der Innenraum der Kammer (4) mit dem Nutz- und/oder Wohnbereich (2) des Gebäudes (1) in offener Verbindung steht.

2. Gebäude nach Anspruch 1, dadurch gekennzeichnet, daß die Kammer (4) als Fertigteilkeller ausgebildet ist.

3. Gebäude nach Anspruch 1 oder 2, dadurch gekennzeichnet, daß die Kammer (4) nur unter einem Teil der Grundfläche des Gebäudes (1) angeordnet ist.

4. Gebäude nach einem der Ansprüche 1 bis 3, dadurch gekennzeichnet, daß die Wände (10) und die Decken (11), sowie das Dach (12) des Gebäudes (1) hoch wärmeisolierend, jedoch mit geringer Wärmespeicherfähigkeit ausgebildet sind.

5. Gebäude nach einem der Ansprüche 1 bis 4, dadurch gekennzeichnet, daß den Fenstern, insbesondere den südseitig gelegenen Fenstern (5) Abschattungseinrichtungen (6, 7) zugeordnet sind.

6. Gebäude nach Anspruch 5, dadurch gekennzeichnet, daß die Abschattungseinrichtungen (6, 7) mit Sonnenzellen (8) und/oder Sonnenkollektoren ausgestattet sind.

7. Gebäude nach einem der Ansprüche 1 bis 6, dadurch gekennzeichnet, daß zur Unterstützung des Wärmetausches zwischen Erdreich (9) und der im Gebäude (1) und der in der Kammer (4) vorgesehenen Luft über den im Erdreich (9) verlegten Wärmetauscher wenigstens eine Wärmepumpe vorgesehen ist.

8. Gebäude nach einem der Ansprüche 1 bis 7, dadurch gekennzeichnet, daß die Böden (18) der über der Kammer (4) befindlichen Räume (16, 17) des Gebäudes (1) wärmedurchlässig ausgeführt sind.

9. Gebäude nach einem der Ansprüche 1 bis 8, dadurch gekennzeichnet, daß in Umgrenzungswänden und/oder in der Bodenplatte der Kammer (4) Wärmetauscherrohre angeordnet sind.

10. Gebäude nach einem der Ansprüche 1 bis 9, dadurch gekennzeichnet, daß wenigstens die Umgrenzungswände der Kammer (4) feuchtigkeitsdurchlässig ausgeführt sind.
